# EUROPEAN PATENT APPLICATION

(11) **EP 4 641 297 A1**
(43) Date of publication of application: **29.10.2025**
(21) Application number: 25157655.9
(22) Date of filing: 13.02.2025
(51) Int. Cl.: G03B 5/00, G02B 21/36, G03B 15/02, G03B 15/03

(54) **OPTICAL DEVICE**

(30) Priority: 22.04.2024 IT 202400009133
(71) Applicant: Microconsult Srl, 50019 Sesto Fiorentino (FI) (IT)
(72) Inventor: VALLERIANI, Marco, 50019 Sesto Fiorentino (FI) (IT)
(74) Representative: Fabbriciani, Simone

(57) **Abstract**

Described is an optical device (1), in particular for the macro-photography sector, wherein an optical zoom unit (2) has a fixed section (3) and a section (4) movable in the direction of an optical axis (X) of the optical device (1) relative to the fixed section (3). The optical device (1) also comprises a lighting system which includes a lighting ring (5) which can be associated with a first end of the movable section (4); the lighting ring (5) is configured to generate a beam of light designed to strike a sample (C) to be observed. There is also an image sensor (10) facing towards the lighting ring (5) and designed to acquire at least one image of the sample (C) to be observed. The optical device (1) also includes a connector (11) connected to the fixed section (3) by means of a connecting portion (13) and interposed between the image sensor (10) and the fixed section (3) at a predetermined distance.

The invention also relates to a method for mounting such an optical device (1).

## Description

This invention relates to an optical device, in particular for the photography sector, which ranges from macro-photography to stereo-microscopy, as well as the method for assembling the optical device.

More generally speaking, the invention can be applied in the sectors in which it is essential to view, analyse and inspect samples, for example, in the electronic and semiconductor industries, in the goldsmith's sector, in naval and automotive mechanics but also in the cultural heritage sector when it is necessary to carry out checks on works of art for detecting layers of dust or damage on the paintings.

According to the prior art and what is indicated in the prior art document JP 2006337422 A, the analysis of the morphology of the samples of various types often requires the optimisation of the lighting for a predetermined application. The optimised lighting for an application may become ineffective when the parts vary in terms of the geometry and/or the finish, therefore, it is necessary to optimise the lighting depending on the sample to be displayed.

Moreover, it is known that the acquisition of three-dimensional images characterised by a precise perception of the depth is made possible by the use of stereo-microscopes which perform the analysis of the sample not by transparency but by reflection.

In the analysis of minerals or, in general, of samples with reflective surface portions and in the quality control of metals and their alloys, the main drawback which occurs in the use of stereo-microscopes is due to the reflection of light striking the material; in effect, the reflection alters the trajectory of the light causing the loss of information about the surface characteristics of the sample, thus adversely affecting the entire analysis. Moreover, it is known that, for example, for biological microscopes the samples analysed must be adequately prepared to ensure that they observe the details of interest. For this reason, further processing and preparation costs are necessary.

Metallographic and mineralogical analyses are often conducted using macro-photography instruments. The primary advantage offered by the use of an instrument of this type is that good quality images are obtained by means of more compact devices and lower costs.

In fact, the rapid technological evolution in the sector has made macro-photography practicable also using instruments that are not necessarily professional since digital cameras are available on the market at a limited cost.

It is also known that by combining the macro technique with the use of spacer cables, which represent actual extensions positioned between the lens and the machine body, results in a moving away between the lens and the image sensor which leads to an increase in the enlargement ratio. Disadvantageously, the use of the cables makes the structure not very stable, bulky and therefore difficult to transport.

Alternatively, it is possible to use dedicated lenses, the so-called macro lenses, which are optically correct relative to the standard lenses so as to exhibit a less pronounced focal profile aberration.

Macro-photography requires that the sample to be analysed must be in a condition of sufficient exposure to natural light or if this is not possible it is necessary to use a suitable external light source, such as a flash, thus making the acquisition and the subsequent processing of the image more laborious.

A solution of this type is optimum for opaque samples but not for samples characterised by reflective surfaces as often occurs in metallographic and mineralogical analyses.

The technical purpose of the invention is therefore to provide an optical device which is able to overcome the drawbacks of the prior art.

An aim of this invention is to provide an optical device for acquiring images with an enlargement ratio suitable for detecting details on the samples which are analysed.

A further aim of the invention is to provide a high-performance optical device in terms of focusing the sample and resolution the image obtained. Another aim of the optical device is to have an optical device which guarantees an optimum focusing of the sample even if it is moved from the starting position to allow different surfaces to be observed.

The technical purpose indicated and the aims specified are substantially achieved by an optical device comprising the technical features described in one or more of the appended claims. The dependent claims correspond to possible embodiments of the invention.

In particular, the above-mentioned technical purpose and the aims indicated are substantially achieved by an optical device for use in the macro-photography sector which comprises an optical zoom unit, which has a fixed section and a section movable in the direction of an optical axis of the optical device relative to the fixed section, and a lighting system equipped with a lighting ring which can be stably associated with a first end of the movable section.

The lighting ring is configured to generate a beam of light which, during use, is designed to strike a sample to be observed.

The optical device also includes an image sensor facing towards the lighting ring and which is designed to acquire at least one image of the sample.

There is also a connector which can be connected to the fixed section using a connecting portion. The connector is interposed between the image sensor and the fixed section, defining a predetermined distance precisely between the image sensor and the fixed section. The connector is connected to the fixed section by means of a connecting portion. Advantageously, there is a spacer body designed to be positioned between the image sensor and the fixed section. The spacer body is engaged with the connecting portion so as to be in contact between the surfaces of the fixed section and the connector which face each other.

The spacer body defines a clamping torque which removably fixes the connector to the device: the torque depends on the predetermined distance between the contact surfaces of the fixed section and the connector which face each other.

In particular, for a thickness of between 1 0.7 mm and 2.3 mm, inclusive, preferably between 1 and 2 mm, inclusive, more preferably between 1.2 and 1.8 mm, inclusive, the clamping torque is, respectively, between 1500 and 1800 Nm, inclusive, preferably between 1570 and 1730 Nm, inclusive, more preferably between 1600 and 1700 Nm, inclusive, even more preferably between 1630 and 1670 Nm, inclusive equal to 1650 Nm.

This invention overcomes the drawbacks of the prior art by providing an optical device which, thanks to the particular constructional geometry and the clamping of the spacer body, allows the magnification and instantaneous focusing of the details of the sample observed.

An advantage of this invention is therefore to allow a clear view of the details of the sample which it is of interest to display.

Another aspect of the invention relates to the method for mounting the optical device.

This method comprises positioning the spacer body between the image sensor and the fixed section, in such a way as to engage the spacer body with a connecting portion of the connector: the spacer body must be in contact with the surfaces of the fixed section and of the connector which face each other.

The spacer body is then clamped, preferably with a torque wrench, taking care to give a clamping torque depending on the predetermined distance between the contact surfaces of the fixed section and the connector; in this way, the connector is fixed to the device.

Further features and advantages of the invention are more apparent in the non-limiting description which follows of a non-exclusive embodiment of an optical device.

The description is set out below with reference to the accompanying drawings, which are provided solely for purposes of illustration without restricting the scope of the invention and in which:
Figure 1 shows a first cross-section view of the optical device according to this invention;

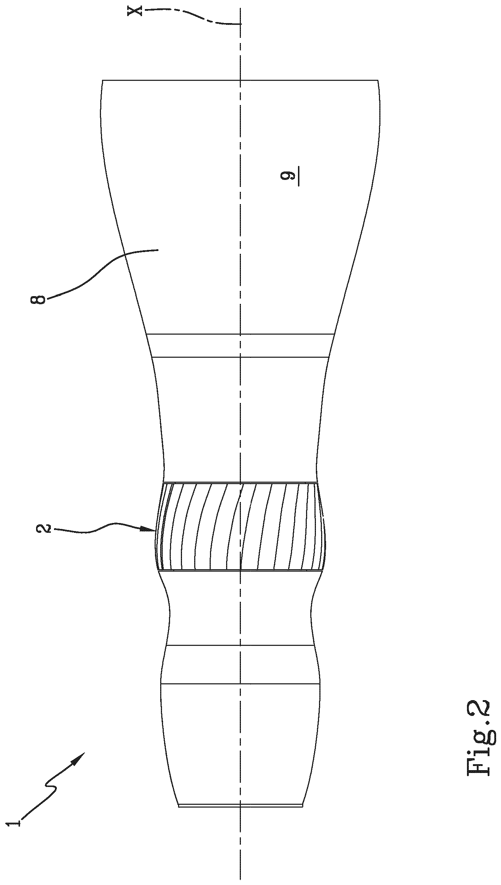

Figure 2 shows a schematic side view of the optical device according to the invention;
Figure 3 shows an exploded perspective view of a component of the optical device according to this invention;
Figure 4 shows a second cross-section view of the optical device according to the invention.

With reference to the accompanying drawings, the numeral 1 denotes in its entirety the optical device 1.

The optical device 1 for use in the sector of macro-photography comprises an optical zoom unit 2 which in turn comprises a fixed section 3 and a section 4 movable in the direction of an optical axis "X" of the optical device 1 relative to the fixed section 3.

In other words, the movable section 4 is movable relative to the fixed section 3. In particular, the movable section 4 is movable in the direction of the optical axis "X" of the optical device 1.

According to an embodiment, the fixed section 3 and the movable section 4 of the optical zoom unit 2 comprise one or more lenses with predetermined constructional features.

The optical device 1 also comprises a lighting system comprising a lighting ring 5 which can be stably associated with a first end of the movable section 4. The lighting ring 5 is configured to generate a light beam which, in use, is configured to strike a sample C to be observed which does not pertain to the invention.

The term "sample" C may mean any object or body belonging to various sectors such as, for example, the electronic and semiconductor industry, the goldsmith's sector, naval and automotive mechanics but also in the cultural heritage sector. Moreover, the term "sample C" may also mean surfaces of celestial bodies.

An image sensor 10 facing towards the lighting ring 5 is also part of the optical device 1 and configured to acquire at least one image of the sample C to be observed.

According to a possible embodiment, the optical device 1 comprises a control unit 12 associated with the image sensor 10 and configured for making external data supply or transmission connections.

In other words, the image sensor 10 is part of the control unit 12 configured for housing storage means, external data supply or transmission connections and other means for directly entering commands.

In fact, according to a possible embodiment, a user interface unit is connected to the control unit 12 to perform one or more control operations on the optical device 1.

The optical device 1 also comprises a connector 11 interposed between the image sensor 10 and the fixed section 3. The connector 11 defines a predetermined distance between the image sensor 10 and the fixed section 3 and is connected to the fixed section 3 by means of a connecting portion 13.

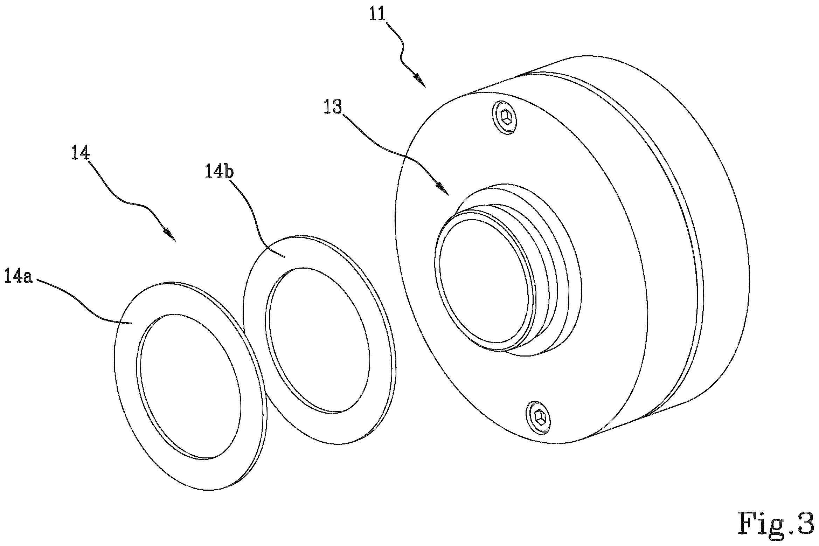

According to an embodiment shown in Figure 3, the connecting portion 13 is made in the form of a tubular body having a threaded end.

In other words, the connector 11 establishes a predetermined distance between the image sensor 10 and the fixed section 3 in such a way that the distance is in the order of 20 mm.

The optical device 1 also comprises, between the constituent elements, a spacer body 14 applied to the connecting portion 13 and interposed between the contact surfaces of the fixed section 3 and the connector 11. According to an embodiment, the spacer body 14 has an annular shape and is fitted around the tubular body.

In other words, the spacing body 14 is fitted around the connecting portion 13 and in particular around the tubular body.

Preferably, the spacing body 14 defines between the contact surfaces of the fixed section 3 and the connecting portion 13 a clamping torque equal to 1650 Nm.

Moreover, according to the embodiment shown in Figure 3, the spacing member 14 is made of plastic and has a thickness of between 1 mm and 2 mm.

In other words, the spacer body 14 is made of plastic and has a thickness of between 1 mm and 2 mm for maintaining the ratio between the distance of the image sensor 10 from the fixed section 3, and the measured clamping torque fixing by means of a torque wrench the connector 11 to the optical device 1.

According to an embodiment of the optical device 1 shown in Figure 3, the spacer body 14 is defined by at least two spacer elements 14a and 14b. Alternatively, according to a different embodiment not shown in the drawings, the spacer body 14 is defined by a single spacer element with a thickness such as to be equivalent to the superposing of the two spacer elements 14a and 14b shown in Figure 3. According to further embodiments, the spacer body 14 may be made by means of a different number of spacer elements.

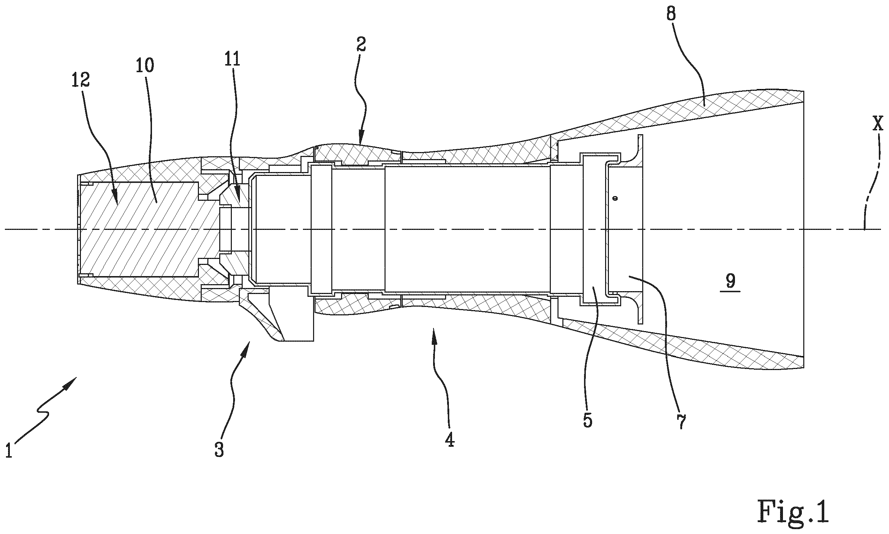

The optical device 1 also comprises a first diffuser 7 connected to the movable section 4 and a second diffuser 8 integral with the fixed section 3. According to an embodiment shown in Figure 1, the first diffuser 7 and the second diffuser 8 have axes coinciding with the optical axis "X" and extend in an increasing direction starting from the respective movable section 4 and fixed section 3.

Moreover, the first diffuser 7 is interposed between the lighting ring 5 and the sample C on which the light beam strikes. The lighting ring 5 comprises LED modules or, according to different embodiments of it, any similar light source.

The second diffuser 8 is long enough to create a cavity 9 containing the lighting ring 5 and the first diffuser 7 in any of the positions occupied by the latter since they are associated with the movable section 4.

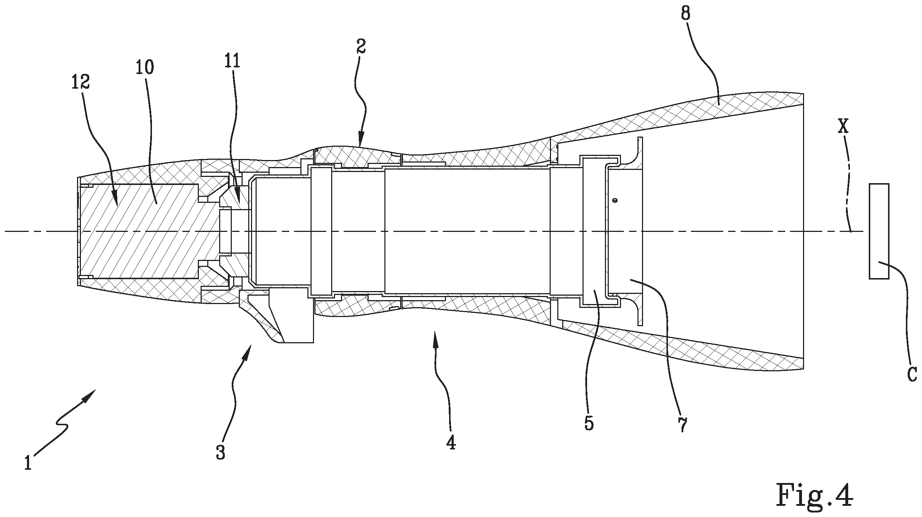

For this reason, as shown, for example, in Figure 4, the arrangement of the components in the optical device 1 is such that the light beam which reaches the sample C is at least inclined relative to the optical axis "X" since it has been at least diffused by the first diffuser 7.

The inner and outer walls of the first diffuser 7 and of the second diffuser 8 are made of opaque material, that is to say, not optically transparent. In other words, they are white surfaces not in the form of a mirror suitable for diffusing striking light.

In effect, the light beam emitted by the lighting ring 5 is diffused by the first diffuser 7 on the inner walls of the second diffuser 8, which conveys the diffused light towards the sample C.

In other words, the inclination of the light beam and the geometry of the corresponding light section are determined by the reciprocal position of the first diffuser 7 and the second diffuser 8.

Further, according to an aspect of this invention, providing the optical device 1 with a lighting system and suitable enhanced lenses allows analysis of samples located up to several kilometres apart. Advantageously, the optical device 1 according to this invention makes it possible to acquire images with an enlargement ratio suitable, for example, for performing metallographic and mineralogical analyses. Moreover, advantageously, the optical device 1 is provided with a front lighting system configured in such a way as to not generate problems of quality of the image acquired due to the reflection of the light by the sample.

Advantageously, the lighting ring 5 comprises LED modules, thus offering long-term performance levels and significant energy saving.

Advantageously, the optical device 1 according to this invention makes it possible to easily focus the details of the sample to be analysed, to obtain a resolution of at least 1080P even when the sample which is the object of the observation moves and to show an enlargement of at least up to 40X.

Moreover, advantageously, the optical device 1 according to this invention combines high resolution information given by the quality of the optical system and the lighting system, with structural simplicity which makes possible the use also by non-specialised personnel.

In addition, this constructional simplicity is closely correlated to not particularly laborious maintenance and with lower production and maintenance costs with respect to those available on the market. Reference has been made above to preferred embodiments; therefore, it is possible to make modifications relative to the materials used as well as to the type of light source as clarified by the following dependent claims.

## Claims

1. An optical device (1), particularly for the macro-photography sector, comprising:
a zoom optical unit (2) having a fixed section (3) and a section (4) movable in the direction of an optical axis (X) of the optical device (1) relative to the fixed section (3);
a lighting ring (5) which can be associated with a first end of the movable section (4) and configured to generate a beam of light designed to strike a sample (C) to be observed;
an image sensor (10) facing towards the lighting ring (5) and designed to acquire at least one image of the sample (C) to be observed;
a connector (11) connected to the fixed section (3) by means of a connecting portion (13) and interposed between the image sensor (10) and the fixed section (3) at a predetermined distance.

2. The optical device (1) according to claim 1, comprising a spacer body (14) designed to be positioned between the image sensor (10) and the fixed section (3) and for engaging with the connecting portion (13), to be in contact between surfaces of the fixed section (3) and of the connector (11) facing each other.

3. The optical device (1) according to claim 2, wherein the spacer body (14) defines a clamping torque for fixing the connector to the device (1); the clamping torque depending on said predetermined distance between the surfaces of the fixed section (3) and the connector (11) facing each other.

4. The optical device (1) according to claim 3, wherein the clamping torque is between1500 and 1800 Nm, inclusive, preferably between 1570 and 1730 Nm, inclusive, more preferably between 1600 and 1700 Nm, inclusive, even more preferably between 1630 and 1670 Nm, inclusive.

5. The optical device (1) according to claim 4, wherein the spacer body (14) has a thickness of between 0.7 and 2.3 mm, inclusive, preferably between 1 and 2 mm, inclusive, more preferably between 1.2 and 1.8 mm, inclusive.

6. The optical device (1) according to any one of claims 1 to 5, wherein the connecting portion (13) is a tubular body having a threaded end.

7. The optical device (1) according to claim 6, wherein the spacer body (14) has an annular shape and is designed to be fitted around the connecting portion (13).

8. The optical device (1) according to any one of claims 1 to 7, wherein the predetermined distance between the image sensor (10) and the fixed portion (3) is between 14 mm and 16 mm.

9. The optical device (1) according to any one of claims 1 to 8, comprising a control unit (12) associated with the image sensor (10), configured to make external data feed or transmission connections and connected to a user interface unit to perform one or more control operations on the optical device (1).

10. A method for mounting an optical device (1), particularly for macro-photography according to any one of claims 1 to 9, comprising the steps consisting of:
- positioning a spacer body (14) between an image sensor (10) and a fixed section (3), in such a way as to engage it with a connecting portion (13) of a connector (11) and be in contact between the surfaces of the fixed section (3) and of the connector (11) facing each other;
- clamping the spacer body (14) with a clamping torque depending on the predetermined distance between the contact surfaces of the fixed section (3) and of the connector (11), in such a way as to fix the connector (11) to the optical device (1).
